# EUROPEAN PATENT SPECIFICATION

(11) **EP 4 286 230 B1**
(45) Date of publication and mention of the grant of the patent: **13.08.2025**
(21) Application number: 22176879.9
(22) Date of filing: 02.06.2022
(51) Int. Cl.: B60T 17/00, D04H 1/4391, B01D 63/02

(54) **NOISE DAMPING FIBRE WITH SURFACE GROOVES**
SCHALLDÄMPFENDE FASER MIT OBERFLÄCHENNUTEN
FIBRE D'AMORTISSEMENT DU BRUIT AVEC DES RAINURES DE SURFACE

(43) Date of publication of application: 06.12.2023
(73) Proprietor: KNORR-BREMSE Systeme für Nutzfahrzeuge GmbH, 80809 München (DE)
(72) Inventor: SOMODI, Richard, 6034 Helvécia (HU); TANCZOS, Miklos, 6000 Kecskemet (HU); SOVAGO, Szabolcs, 6000 Kecskemet (HU)

(56) References cited:
- EP-A1- 0 600 331
- DE-A1- 102004 036 030
- US-B1- 6 753 082

## Description

The present invention relates to a noise damping fibre for a noise damper for compressed air systems, in particular for brake systems of utility vehicles. Further, the present invention relates to a noise damping fibre mesh as well as to a noise damper. Further, the present invention relates to a method for producing a noise damping fibre mesh.

In practice, it is known that compressed air systems often release large amounts of compressed air into the environment within a very short time. This expansion process can produce considerable noise. In order to keep the noise emission at an acceptable level, noise dampers or silencers are often necessary for compressed air systems.

As more and more environmental regulations lead to ever greater noise damping requirements for compressed air systems, the known systems are no longer effective enough to achieve the required high noise damping and at the same time sufficiently eliminate the risk of clogging and icing or to be accommodated in a space-saving manner.

Thus, in order to increase the performance of the noise dampers, the passage of the compressed air in the noise damping material or noise reducing material can be increased.

This can be achieved, on the one hand, by using a larger noise damper housing for the noise damping material. However, this is often difficult to implement because there is often not enough space available. In utility vehicles, the available space is increasingly limited and larger noise dampers can hardly be accommodated.

On the other hand, the flow path for the compressed air in the noise damping material accommodated within the noise damper housing can be prolonged. This depends inter alia on the density and structure of the noise damping material.

From WO 2019/063350 A1, a noise damper is already known which optionally uses a noise damping material in the form a fibre or thread material in weave, crochet or mesh structure but also a granular structure. The shape, size, strength, porosity, etc. of the thread material is selected in such a way that, on the one hand, it impedes the compressed air flow little, but on the other hand, it dampens the sound efficiently, whereby the compressed air flow passes from the inlet duct to outlet openings in the housing. However, the use of the noise damping material is indicated as optional.

Furthermore, DE 10 2004 036 030 A1 discloses a fibre or thread for noise damping material, in particular for a noise damper in compressed air systems, made of thermoplastic material. The material has structure or profiling formed or impressed into its surface which increases the surface area, the fibre being processed into a braided or knitted hose section, the ends of which are welded in such a way that an approximately rectangular hose section is formed, which, rolled into a knitted roll, forms the noise damping material. However, the disclosed fibres have smooth surface.

It is therefore an object of the present invention to improve a noise damping fibre as mentioned above, in particular in that the surface roughness is increased.

This object is solved according to the present invention with a noise damping fibre according to the features of claim 1. Correspondingly, a noise damping fibre for a noise damper for compressed air systems, in particular for brake systems of utility vehicles, with surface grooves (e.g. microscopic surface grooves) formed by surface treatment is provided.

The invention is based on the basic idea that increasing the surface roughness by surface grooves, formed by surface treatment, further increases the noise damping performance of fibres compared to fibres with a smooth or nearly smooth surface, since the passing air is further deflect and thus the noise is damped by the rougher surface. In other words, the passing air develops a noise with less energy due to microscopic grooves which influence the behaviour of the turbulences of the air passing by. This also has the advantage that density or arrangement of fibres of a noise damping material inside a noise damper does not have to be changed.

Furthermore, it can be provided that the surface of the fibre has fringes and/ or burr. After surface treatment, i.e. by roughening the surface of the fibre, fringes or burr is formed. If these are left on the fibre's surface, they form further obstacles for the propagating noise.

It is also conceivable that the fibre is made of a thermoplastic. Possible thermoplastics may be polypropylene (PP), or polyethylene (PE), or polyamide (PA), or poly(ethylene terephthalate) (PET), or polyester. A thermoplastic becomes pliable or moldable at a certain elevated temperature and solidifies upon cooling. The polymer chains associate by intermolecular forces, which weaken rapidly with increased temperature, yielding a viscous liquid. In this state, thermoplastics may be reshaped and are typically used to produce parts by various polymer processing techniques such as injection molding, compression molding, calendering, and extrusion. Another unique feature is the weldability of thermoplastics.

It is further conceivable that the surface roughness of the fibre is at least 10 µm, preferably the surface roughness is in the range of 10 µm to 40 µm ± 10%.

It is still further conceivable that the surface roughness of the fibre is at least twice as high after said surface treatment compared to before said surface treatment.

Moreover, it is possible that the length of the fringes and/or burr of the fibre is in the range of 0,05 to 10 mm, in particular in the range of 0,05 mm ± 10% to 10 mm ± 10%, preferably in the range of 0,05 mm ± 5% to 10 mm ± 5%.

Additionally or alternatively, it is also conceivable that the length of the fringes and/or burr of the fibre is at least 0,05 mm.

Furthermore, it can be provided that the cross section of the fibre is rectangular, elliptical or circular.

The object of the present invention can further be solved by a noise damping fibre mesh which is knitted, braided or woven of a plurality of noise damping fibres as described above.

The object of the present invention can further be solved by a noise damper for compressed air systems, in particular for brake systems of utility vehicles, having a noise damping fibre mesh as described before.

Furthermore, the present invention relates to a method for producing a noise damping fibre mesh, wherein the method comprises the steps of:
- forming thermoplastic fibres by a molding tool or an extruding tool;
- surface treating of the fibres by the molding tool, the extruding tool, or another tool configured to treat the surface of thermoplastic fibres; and
- knitting, braiding or weavening a plurality of the surfaced treated fibres to a noise damping fibre mesh.

Molding or extruding are well-known manufacturing processes for thermoplastics, which is why they should be preferably applied in case of the present starting or feedstock material. The surface treatment of the molded or extruded thermoplastic fibres can be applied during molding/extruding or even afterwards in an individual post-finishing step, wherein the surface treatment of the fibres can be performed in the molding or extruding tool, or in another, separate tool which is preferably located downstream with respect to the production line. Surface treatment should be understood as a roughening of the fibres' surface.

After the surface treatment, i.e. surface roughening, a defined plurality of surface roughened fibres is knitted, braded or woven together to form a noise damping fibre mesh, which is preferably used within a housing of a noise damper.

The shape of the mesh, the fibre pattern, density and thickness are matched to the desired application.

All of the structural and functional features associated with the noise damping fibre as well as its possible embodiments described above can, alone or in combination, also be provided in the method for producing a noise damping fibre mesh according to the present invention and the advantages associated therewith can be achieved as well.

Further details and advantages of the present invention shall now be disclosed in an embodiment according to the invention in connection with the drawing.

It is shown in:
- Fig. 1: a schematic perspective view of a noise damping fibre of the prior art;
- Fig. 2: a top view of the noise damping fibre of Fig. 1;
- Fig. 3: a schematic perspective view of a first embodiment of a noise damping fibre according to the present invention;
- Fig. 4: a top view of a second embodiment of the noise damping fibre according to the present invention;
- Fig. 5: a top view of a third embodiment of the noise damping fibre according to the present invention;
- Fig. 6: an embodiment of a method for producing a noise damping fibre mesh according to the present invention;
- Fig. 7: a schematic perspective view of a fourth embodiment of a noise damping fibre according to the present invention; and
- Fig. 8: a schematic perspective view of a fifth embodiment of a noise damping fibre according to the present invention;.

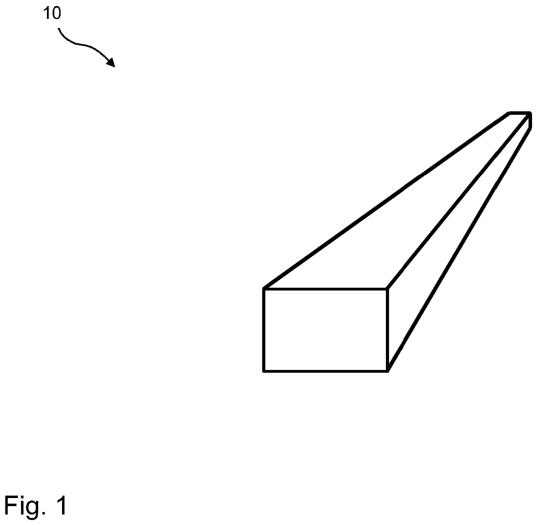

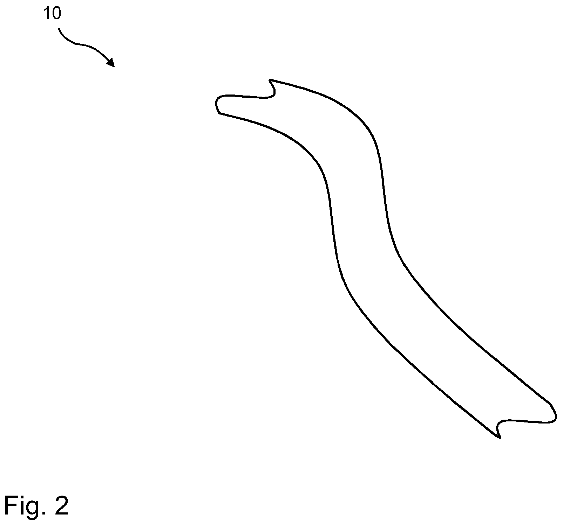

Fig. 1 shows a schematic perspective view of a noise damping fibre 10 of the prior art. The prior art fibre 10, made of a thermoplastic, has a smooth surface and a rectangular cross section. From Fig. 2 it can be deduced that the fibre is flexible or bendable.

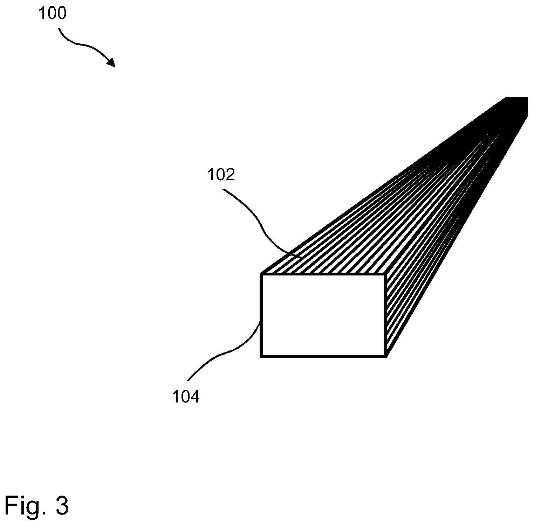

In Fig. 3, a schematic perspective view of a first embodiment of a noise damping fibre 100 according to the present invention is shown.

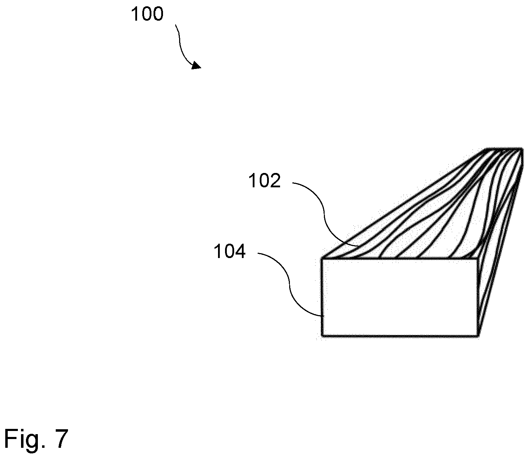

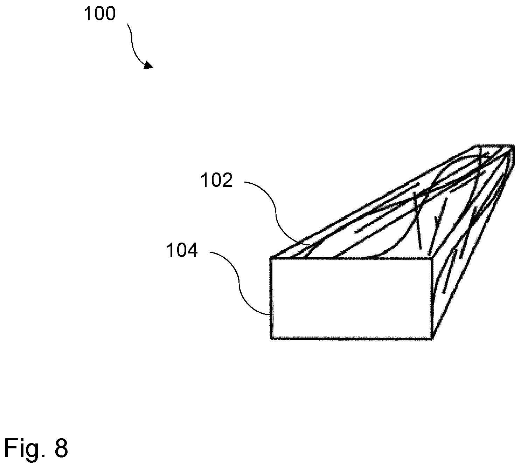

The fibre 100 has grooves 102, which are preferably lengthwise and continuous. The grooves 102 are arranged in a substantially parallel manner to each other. Other arrangements are also conceivable such as shown in Fig. 7 and/or Fig. 8. The grooves are in the range of 10 to 40 µm, in particular in the range of at least 10 µm to 40 µm ± 10%.

The grooves 102 are inserted either after molding or extrusion or during molding or extrusion of the fibre.

The fibre 100 is made of a thermoplastic, which gives it flexibility or pliability.

The fibre 100 has a rectangular cross section 104. Other cross section shapes like a circle or ellipse are also conceivable.

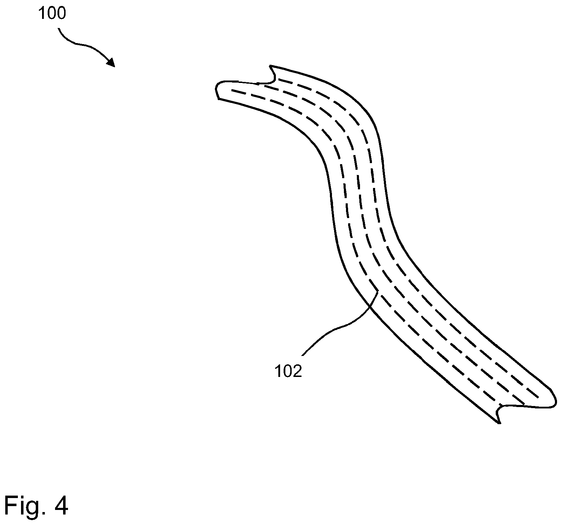

In Fig. 4, a top view of second embodiment of the noise damping fibre 100 is shown.

The fibre 100 of Fig. 4 has also lengthwise, but sectionally interrupted grooves 102.

The shape or design of grooves 102 depends on the surface treatment process and/or tool.

The grooves 102 can also run crosswise to the longitudinal extension of the fibre 100 or in any other direction.

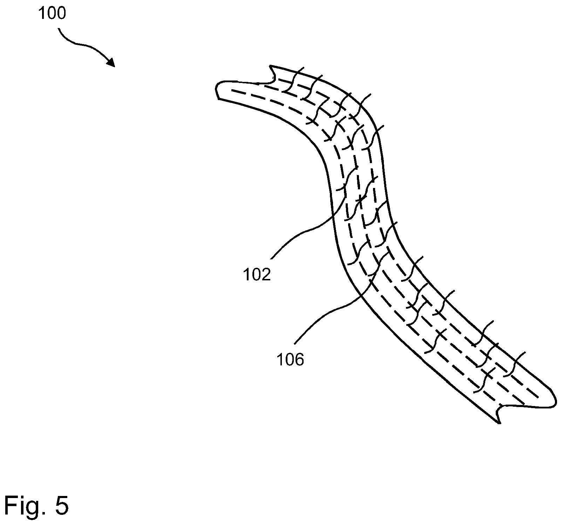

Fig. 5 shows a third embodiment of the noise damping fibre 100 according to the present invention.

The fibre 100 of Fig. 5 has in addition to grooves 102 a plurality of fringes or burr 106 which has not been removed after roughening the surface of the fibre 100.

Due to heterogeneous material composition, tolerances in fibre production and wear and tear on the surface treatment tools, the number, shape and distribution of the burr 106 is non-uniform.

The burr 106 also prevents the noise from developing, just like the grooves 102.

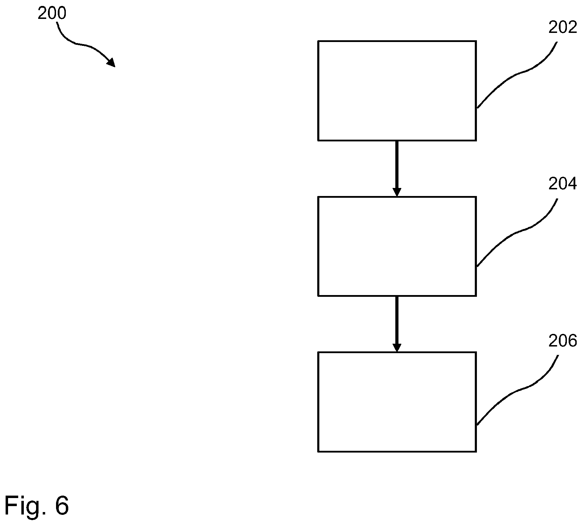

In Fig. 6, an embodiment of a method 200 for producing a noise damping fibre mesh is presented.

The method 200 is suitable to produce noise damping fibres 100 and noise damping fibre mesh according to the present invention.

In a first method step 202, thermoplastic fibres are formed by a molding or an extruding tool. In other words, a thermoplastic feedstock is formed into fibres.

In a second method step 204, the thermoplastic fibres' surface is treated either by the molding tool, the extruding tool, or another tool configured to treat the surface of thermoplastic fibres. Surface treatment is to be understood as the roughening of the surface, wherein roughening can be achieved by brushing, thorns, rolling or the like.

The method 200 thus provides the fibres 100 described above.

In a third method step 206, a plurality of the fibres 100 is knitted, braided or woven to form a noise damping fibre mesh which may be used in a noise damper for compressed air systems.

When comparing results of surface roughness comparison measurements of fibres from different suppliers, it has been determined that the surface treatment leads to a significant increase in surface roughness R_{z}. The increase in surface roughness R_{z} leads to a better absorption of airborne sound or noise, i.e. sound energy is converted into dissipative energy. Thus, the noise absorption efficiency is increased by the larger or expanded surface area of the fibres.

In particular, said measurements were performed on fibres already knitted to fibre mesh. Accordingly, the respective raw material, i.e. as delivered, may have a lower surface roughness R_{z}, in particular compared to the material having been surface treated, e.g., roughened.

At least three measurements were carried out for each fibre type, wherein in addition to the values of the individual measurements, the average (avg.), minimum (min.) and maximum (max.) values in relation to the total of the at least three measurements of each fibre type were determined.

In this respect, it has been determined that a surface treatment according to the present invention results in a surface roughness of at least 10 µm. Furthermore, it appears that in particular the average surface roughness R_{z} after surface treatment is at least two times higher than that before the treatment.

In Fig. 7, a schematic perspective view of a fourth embodiment of a noise damping fibre 100 according to the present invention is shown.

The fibre 100 has grooves 102, which are preferably lengthwise and continuous. The grooves 102 are arranged in a substantially non-parallel manner to each other. The grooves are in the range of 10 to 40 µm, in particular in the range of at least 10 µm to 40 µm ± 10%.

The grooves 102 are inserted either after molding or extrusion or during molding or extrusion of the fibre.

The fibre 100 is made of a thermoplastic, which gives it flexibility or pliability.

The fibre 100 has a rectangular cross section 104. Other cross section shapes like a circle or ellipse are also conceivable.

In Fig. 8, a schematic perspective view of a fifth embodiment of a noise damping fibre 100 according to the present invention is shown.

The fibre 100 has grooves 102, which are substantially lengthwise and at least partly non-continuous. The grooves are in the range of 10 to 40 µm, in particular in the range of at least 10 µm to 40 µm ± 10%.

The grooves 102 are inserted either after molding or extrusion or during molding or extrusion of the fibre.

The fibre 100 is made of a thermoplastic, which gives it flexibility or pliability.

The fibre 100 has a rectangular cross section 104. Other cross section shapes like a circle or ellipse are also conceivable.

### REFERENCE SIGNS

- 10: prior art noise damping fibre
- 100: noise damping fibre
- 102: grooves
- 104: cross section
- 106: fringe/burr
- 200: method for producing a noise damping fibre mesh
- 202: method step 1
- 204: method step 2
- 206: method step 3

## Claims

1. A noise damping fibre (100) for a noise damper for compressed air systems, in particular for brake systems of utility vehicles, with surface grooves (102) formed by surface treatment, wherein the surface grooves are microscopic surface grooves.

2. The noise damping fibre (100) according to claim 1,
**characterized in that**
the surface of the fibre has fringes and/or burr (106).

3. The noise damping fibre (100) according to claim 1 or claim 2,
**characterized in that**
the fibre (100) is made of a thermoplastic.

4. The noise damping fibre (100) according to one of the preceding claims,
**characterized in that**
the surface roughness of the fibre (100) is at least 10 µm.

5. The noise damping fibre (100) according to claim 4,
**characterized in that**
the surface roughness of the fibre (100) is in the range of 10 µm to 40 µm ± 10%.

6. The noise damping fibre (100) according to claim 4,
**characterized in that**
the surface roughness of the fibre (100) is at least twice as high after said surface treatment compared to before said surface treatment.

7. The noise damping fibre (100) according to one of the preceding claims,
**characterized in that**
the length of the fringes and/or burr (106) of the fibre (100) is at least 0,05 mm.

8. The noise damping fibre (100) according to claim 7,
**characterized in that**
the length of the fringes and/or burr (106) of the fibre (100) is in the range of 0,05 to 10 mm.

9. The noise damping fibre (100) according to one of the preceding claims,
**characterized in that**
the cross section (104) of the fibre (100) is rectangular, elliptical or circular.

10. A noise damping fibre mesh knitted, braided or woven of a plurality of noise damping fibres (100) according to one of claims 1 to 9.

11. A noise damper for compressed air systems, in particular for brake systems of utility vehicles, having a noise damping fibre mesh according to claim 10.

12. A method (200) for producing a noise damping fibre mesh, wherein the method comprises the steps of:
- forming (202) thermoplastic fibres by a molding tool or an extruding tool;
- surface treating (204) of the fibres by the molding tool, the extruding tool, or another tool configured to treat the surface of thermoplastic fibres, wherein the treated fibers have microscopic surface grooves; and
- knitting, braiding or weaving (206) a plurality of the surfaced treated fibres, where the fibres are the noise damping fibres (100) according to one of claims 1 to 9, to a noise damping fibre mesh.

## Patentansprüche

1. Schalldämpfende Faser (100) für einen Schalldämpfer für Druckluftsysteme, insbesondere für Bremssysteme von Nutzfahrzeugen, mit durch Oberflächenbehandlung gebildeten Oberflächenrillen (102), wobei die Oberflächenrillen mikroskopische Oberflächenrillen sind.

2. Schalldämpfende Faser (100) nach Anspruch 1,
**dadurch gekennzeichnet, dass**
die Oberfläche der Faser Fransen und/oder einen Grat (106) aufweist.

3. Schalldämpfende Faser (100) nach Anspruch 1 oder Anspruch 2,
**dadurch gekennzeichnet, dass**
die Faser (100) aus einem Thermoplast besteht.

4. Schalldämpfende Faser (100) nach einem der vorstehenden Ansprüche,
**dadurch gekennzeichnet, dass**
die Oberflächenrauheit der Faser (100) mindestens 10 µm beträgt.

5. Schalldämpfende Faser (100) nach Anspruch 4,
**dadurch gekennzeichnet, dass**
die Oberflächenrauheit der Faser (100) im Bereich von 10 µm bis 40 µm ± 10 % liegt.

6. Schalldämpfende Faser (100) nach Anspruch 4,
**dadurch gekennzeichnet, dass**
die Oberflächenrauheit der Faser (100) nach der Oberflächenbehandlung im Vergleich zu vor der Oberflächenbehandlung mindestens doppelt so hoch ist.

7. Schalldämpfende Faser (100) nach einem der vorstehenden Ansprüche,
**dadurch gekennzeichnet, dass**
die Länge der Fransen und/oder des Grats (106) der Faser (100) mindestens 0,05 mm beträgt.

8. Schalldämpfende Faser (100) nach Anspruch 7,
**dadurch gekennzeichnet, dass**
die Länge der Fransen und/oder des Grats (106) der Faser (100) im Bereich von 0,05 bis 10 mm liegt.

9. Schalldämpfende Faser (100) nach einem der vorstehenden Ansprüche, **dadurch**
**gekennzeichnet, dass**
der Querschnitt (104) der Faser (100) rechteckig, elliptisch oder kreisförmig ist.

10. Schalldämpfendes Fasernetz, das aus einer Vielzahl von
schalldämpfenden Fasern (100) nach einem der Ansprüche 1 bis 9 gewirkt, geflochten oder gewebt ist.

11. Schalldämpfer für Druckluftsysteme, insbesondere für Bremssysteme von Nutzfahrzeugen, der ein schalldämpfendes Fasernetz nach Anspruch 10 aufweist.

12. Verfahren (200) zum Erzeugen eines schalldämpfenden Fasernetzes, wobei das Verfahren die folgenden Schritte umfasst:
- Bilden (202) von thermoplastischen Fasern durch ein Formwerkzeug oder ein Extrusionswerkzeug;
- Oberflächenbehandeln (204) der Fasern durch das Formwerkzeug, das Extrusionswerkzeug oder ein anderes Werkzeug, das dazu konfiguriert ist, die Oberfläche von thermoplastischen Fasern zu behandeln, wobei die behandelten Fasern mikroskopische Oberflächenrillen aufweisen; und
- Wirken, Flechten oder Weben (206) einer Vielzahl der oberflächenbehandelten Fasern, wobei die Fasern die schalldämpfenden Fasern (100) nach einem der Ansprüche 1 bis 9 sind, zu einem schalldämpfenden Fasernetz.

## Revendications

1. Fibre d'amortissement du bruit (100) pour un amortisseur de bruit pour systèmes à air comprimé, en particulier pour systèmes de freinage de véhicules utilitaires, avec des rainures de surface (102) formées par traitement de surface, dans laquelle les rainures de surface sont des rainures de surface microscopiques.

2. Fibre d'amortissement du bruit (100) selon la revendication 1,
**caractérisée en ce que**
la surface de la fibre présente des franges et/ou des bavures (106).

3. Fibre d'amortissement du bruit (100) selon la revendication 1 ou la revendication 2,
**caractérisée en ce que**
la fibre (100) est constituée d'un thermoplastique.

4. Fibre d'amortissement du bruit (100) selon l'une des revendications précédentes,
**caractérisée en ce que**
la rugosité de surface de la fibre (100) est d'au moins 10 µm.

5. Fibre d'amortissement du bruit (100) selon la revendication 4,
**caractérisée en ce que**
la rugosité de surface de la fibre (100) est dans la plage de 10 µm à 40 µm ± 10 %.

6. **Fibre d'amortissement du bruit (100) selon la revendication 4,**
**caractérisée en ce que**
la rugosité de surface de la fibre (100) est au moins deux fois plus élevée après ledit traitement de surface par rapport à avant ledit traitement de surface.

7. Fibre d'amortissement du bruit (100) selon l'une des revendications précédentes,
**caractérisée en ce que**
la longueur des franges et/ou des bavures (106) de la fibre (100) est d'au moins 0,05 mm.

8. Fibre d'amortissement du bruit (100) selon la revendication 7,
**caractérisée en ce que**
la longueur des franges et/ou des bavures (106) de la fibre (100) est dans la plage de 0,05 à 10 mm.

9. Fibre d'amortissement du bruit (100) selon l'une des revendications précédentes,
**caractérisée en ce que**
la section transversale (104) de la fibre (100) est rectangulaire, elliptique ou circulaire.

10. Treillis de fibres d'amortissement du bruit tricoté, tressé ou tissé d'une pluralité de fibres
d'amortissement du bruit (100) selon l'une des revendications 1 à 9.

11. Amortisseur de bruit pour systèmes à air comprimé, en particulier pour systèmes de freinage de véhicules utilitaires, présentant un treillis de fibres d'amortissement du bruit selon la revendication 10.

12. Procédé (200) de production d'un treillis de fibres d'amortissement du bruit, dans lequel le procédé comprend les étapes consistant à :
- former (202) des fibres thermoplastiques à l'aide d'un outil de moulage ou d'un outil d'extrusion ;
- effectuer un traitement de surface (204) des fibres à l'aide de l'outil de moulage, de l'outil d'extrusion ou d'un autre outil configuré pour traiter la surface de fibres thermoplastiques, dans lequel les fibres traitées présentent des rainures de surface microscopiques ; et
- tricoter, tresser ou tisser (206) une pluralité des fibres à surface traitée, où les fibres sont les fibres d'amortissement du bruit (100) selon l'une des revendications 1 à 9, en un treillis de fibres d'amortissement du bruit.
